(19) Europäisches Patentamt / European Patent Office / Office européen des brevets

(11) **EP 4 001 325 B1**

(12) **EUROPEAN PATENT SPECIFICATION**

(45) Date of publication and mention
of the grant of the patent:
**22.01.2025  Bulletin 2025/04**

(21) Application number: **21186638.9**

(22) Date of filing: **20.07.2021**

(51) International Patent Classification (IPC):
**C08F 210/16** (2006.01)   **H01M 50/417** (2021.01)
**C08J 5/18** (2006.01)

(52) Cooperative Patent Classification (CPC):
(C-Sets available)
**C08F 210/16; C08J 5/18; H01M 50/417;**
C08J 2323/06; H01M 50/449; Y02E 60/10    (Cont.)

(54) **POLYETHYLENE RESIN FOR SECONDARY BATTERY SEPARATOR, METHOD FOR MANUFACTURING THE SAME, AND SEPARATOR TO WHICH THE SAME IS APPLIED**

POLYETHYLENHARZ FÜR SEKUNDÄRBATTERIESEPARATOR, VERFAHREN ZUR HERSTELLUNG DAVON UND SEPARATOR, AUF DEN DIESES AUFGETRAGEN IST

RÉSINE DE POLYÉTHYLÈNE POUR SÉPARATEUR DE BATTERIE SECONDAIRE, SON PROCÉDÉ DE FABRICATION, ET SÉPARATEUR L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.11.2020  KR 20200153752**

(43) Date of publication of application:
**25.05.2022  Bulletin 2022/21**

(73) Proprietor: **Hanwha TotalEnergies Petrochemical Co., Ltd.**
**Seosan-si, Chungcheongnam-do 31900 (KR)**

(72) Inventors:
• **HAN, Jae Hyuck**
**31900 Seosan-si, Chungcheongnam-do (KR)**
• **PARK, Eun Jin**
**31900 Seosan-si, Chungcheongnam-do (KR)**
• **LEE, Jin Woo**
**31900 Seosan-si, Chungcheongnam-do (KR)**
• **KANG, Mi Hyeon**
**31900 Seosan-si, Chungcheongnam-do (KR)**
• **PARK, Ji Yong**
**31900 Seosan-si, Chungcheongnam-do (KR)**

(74) Representative: **Patentwerk B.V.**
**P.O. Box 1514**
**5200 BN 's-Hertogenbosch (NL)**

(56) References cited:
**CN-A- 107 936 163      JP-A- 2002 367 587**
**JP-A- 2015 199 828**

EP 4 001 325 B1

(52) Cooperative Patent Classification (CPC): (Cont.)

C-Sets
**C08F 10/02, C08F 4/651;**
**C08F 10/02, C08F 4/6545;**
**C08F 210/16, C08F 2/001;**
C08F 110/02, C08F 2500/34, C08F 2500/07;
C08F 210/16, C08F 210/06, C08F 2500/34,
C08F 2500/26, C08F 2500/24, C08F 2500/05

# EP 4 001 325 B1

## Description

### CROSS-REFERENCE TO RELATED APPLICATION

This application claims priority to and the benefit of Korean Patent Application No. 10-2020-0153752 filed on November 17, 2020 in the Korean Intellectual Property Office.

### BACKGROUND

#### 1. Field

The present invention relates to a polyethylene resin for a separator, a method for manufacturing the same, and a separator to which the same is applied.

#### 2. Description of the Related Art

Ultra-high molecular weight polyethylene (UHMWPE) generally refers to polyethylene having a molecular weight of $10^6$ g/mol or more, and may be again divided into polyethylene having a molecular weight of $3 \times 10^6$ g/mol or more, which is called UHMWPE, and polyethylene having a molecular weight of less than $3 \times 10^6$ g/mol, which is called very high molecular weight polyethylene (VHMWPE). Ultra-high molecular weight polyethylene resins have excellent characteristics owing to their high molecular weight, compared to general-purpose polyethylene, in terms of stiffness, abrasion resistance, environmental stress, uniformity, self-lubrication, chemical resistance, and electrical properties.

Specifically, due to excellent chemical resistance and electrical properties among these characteristics, ultra-high molecular polyethylene is widely used as separators for various batteries. For battery separators, products having a molecular weight of 250,000 to 2.5 million g/mol are usually used.

However, the ultra-high molecular weight polyethylene resin is difficult to process due to its low flowability even in a completely molten state due to its high molecular weight characteristics, as described in US Patent Publication No. 4972035A.

Therefore, unlike a general-purpose polyethylene, the ultra-high molecular weight polyethylene resin cannot be pelletized, and thus may be produced and sold in the form of powder produced after a polymerization process.

Furthermore, reference is made to Chinese patent application CN 107936163, which discloses resins of the UHMWPE class as a material for battery separators, wherein the UHMWPE resin is composed of a polyethylene homopolymer and a polyethylene copolymer.

The produced powder is mixed with oil to be processed into a battery separator, melt-kneaded uniformly in a twin extruder to be formed in a single phase, and a porous film is then formed through the stretching process in the MD direction and the TD direction, followed by removing the phase-separated oil, thereby completing the battery separator. In such a battery separator manufacturing process, it is an important factor to stably operate the melt extrusion process in manufacturing a separator with uniform physical properties.

In addition, recently, thinning of battery separators to increase the capacity of secondary batteries is in progress, and thus the mechanical strength of the separator should be increased. To this end, resins having a higher molecular weight than existing polyethylene resins need to be processed. In this case, uniform melting in the extruder may be difficult to achieve. Therefore, uniform melting in the extruder and suppression of defects caused by non-melting parts may become more important. To this end, the melting properties in the extruder should be easily achieved. Therefore, the melting properties of a resin are important, and, in order to ensure desired melting properties, molecular weight, molecular weight distribution, and thermal properties of low- and high-molecular regions are also important.

### DESCRIPTION OF EMBODIMENTS

### TECHNICAL PROBLEM

An object of the present invention is to provide a polyethylene resin for a separator, in which the mechanical strength of the produced porous separator film can be improved by securing excellent extrusion processability, a method for manufacturing the same, and a separator to which the polyethylene resin is applied.

### SOLUTION TO PROBLEM

In order to achieve the object of the present invention, the present invention provides a polyethylene resin for manufacturing a secondary battery separator according to the appended claim 1, wherein the polyethylene resin is a single particle and has a melting point having a double peak in which a first peak is in the range of 125 °C to 132 °C and a second peak is in the range of 133 °C to 136 °C.

According to the present invention, the polyethylene resin has a viscosity average molecular weight of 500,000 g/mol to 1.2 million g/mol, as measured and calculated as the viscosity (Intrinsic Viscosity, IV).

According to the present invention, the polyethylene resin is one particle formed by a low molecular weight polymer having a viscosity average molecular weight of 100,000 g/mol to 400,000 g/mol and a high molecular weight polymer having a viscosity average molecular weight of 1.5 million g/mol to 2.5 million g/mol, as measured and calculated as the viscosity (Intrinsic Viscosity, IV).

According to an embodiment of the present invention, the polyethylene resin preferably has a molecular weight distribution (MWD) value of 4 to 7.

According to an embodiment of the present invention, it is preferable that the polyethylene resin is in the form of powder and has an average particle diameter of 110 to 140 $\mu$m.

According to an embodiment of the present invention, the polyethylene resin preferably has a particle size distribution (SPAN) of 1.0 or less.

According to an embodiment of the present invention, the polyethylene resin preferably has a density of 0.930 to 0.960g/cm$^3$.

To achieve another object, the present invention provides a method for manufacturing a polyethylene resin for a secondary battery separator according to the appended claim 6, in a hexane slurry or heptane slurry reactor in which two or more reactors are connected in series, including a first reactor and a second reactor, the method comprising the step of continuously polymerizing the polymer formed in the first reactor and the polymer polymerized in the second reactor so as to form one particle, wherein the melting point of the polyethylene resin forms a double peak in which a first peak is in the range of 125 °C to 132 °C and a second peak is in the range of 133 °C to 136 °C.

According to the present invention, the method includes the step of injecting hydrogen by controlling the injection amount thereof, so that the viscosity average molecular weight of the polymer formed in the first reactor is 100,000 g/mol to 400,000 g/mol, as measured and calculated as the viscosity (Intrinsic Viscosity, IV), and the viscosity average molecular weight of the polymer formed in the second reactor is 1.5 million g/mol to 2.5 million g/mol, as measured and calculated as the viscosity (Intrinsic Viscosity, IV).

According to the present invention, the method includes the step of injecting butene or propylene into the second reactor.

According to an embodiment of the present invention, the molecular weight distribution (MWD) value of the polymer formed in the first reactor is preferably 3 to 6, and the MWD value of the polyethylene resin is preferably 4 to 7. However, in the present invention, polymer particles are not mixed but form one particle.

According to an embodiment of the present invention, the density of the polymer formed in the first reactor is preferably 0.950 to 0.960 g/cm$^3$, and the density of the polyethylene resin is preferably 0.930 to 0.960 g/cm$^3$.

In order to achieve another object, the present invention provides a separator to which the polyethylene resin according to the present invention or the polyethylene resin manufactured by the method according to the present invention is applied.

In order to achieve another object, the present invention provides a secondary battery to which the separator according to the present invention is applied.

## ADVANTAGEOUS EFFECTS OF INVENTION

In general, when low-molecular polyethylene and high-molecular polyethylene are physically mixed, there would be no problem at the general molecular weight level in manufacturing a separator for a secondary battery. However, when manufacturing a separator for a secondary battery using an ultra-high molecular weight, the molecular weight of the polymer portion exceeds 1 million, and thus it is difficult to apply the polyethylene resin having an ultra-high molecular weight. That is, powder can be easily melted in the extruder, but polymer powder is relatively difficult to melt, causing a problem of forming a gel in the porous separator. However, the polyethylene resin of the present invention forms a morphology that can be easily melted in the extruder because the polymer part polymerized in the second reactor is formed in the low-molecular polymer polymerized in the first reactor to form one powder grain, thereby providing an easily melting behavior in the extruder while securing the mechanical properties of the separator.

## DETAILED DESCRIPTION

Hereinafter, the present invention will be described in more detail.

**<Polyethylene Resin>**

The present invention provides a polyethylene resin for a secondary battery separator, wherein the polyethylene resin is a single particle, while the melting point of the polyethylene resin forms a double peak in which a first peak is in the range of 125 °C to 132 °C and a second peak is in the range of 133 °C to 136 °C.

Here, the peak generated by the high Tm of the polymer during low molecular weight homopolymerization in the first reactor is the second peak, and the peak generated by the low Tm of the copolymer that is added to the polymer and polymerized in the second reactor is the first peak. Therefore, the first peak may be referred to as Tm of the second reactor polymer, and the second peak may be referred to as Tm of the first reactor polymer.

The polyethylene resin according to the present invention is formed as one particle, not simply a mixture of a low molecular weight polymer and a high molecular weight polymer, and thus the peak of the melting point forms a double peak while forming a peak of one particle size distribution. That is, in the case of a mixture of a low molecular weight polymer and a high molecular weight polymer, one particle exhibits only one melting point peak, but the polyethylene resin according to the present invention exhibits a double melting point peak.

Therefore, since the polymer portion is formed in the low molecular weight polymer to form one particle, the mechanical strength of the high molecular polymer can be improved while reducing the load during extrusion processing.

However, in the case of a mixture in which a low molecular weight polymer and a high molecular weight polymer are simply mixed, the low molecular weight polymer can be easily melted in an extruder, but the high molecular weight polymer is relatively difficult to melt, causing a problem of forming a gel in the porous separator. These problems with existing resins can be solved by the invention.

The melting point (Tm) of the polymer formed in the first reactor, as measured by a differential scanning calorimeter (DSC), may be 133 °C or more and 136 °C or less. If the melting temperature is less than 133 °C, the mechanical strength of the final porous film is lowered, and if the melting temperature exceeds 136 °C, extrusion processability may become poor. The peak of the melting point (Tm) of the final polymer obtained after the first reactor may be 125 °C to 132 °C. If the melting temperature is less than 125 °C, the mechanical strength of the finally formed porous film is lowered, and if the melting temperature exceeds 132 °C, extrusion processability becomes poor.

According to an embodiment of the present invention, the viscosity average molecular weight of the polyethylene resin is preferably 500,000 g/mol to 1.2 million g/mol, as measured and calculated as the viscosity (Intrinsic Viscosity, IV). If the average molecular weight is less than 500,000, the mechanical strength of the separator may not satisfy the desired level when manufactured as a separator, and if the average molecular weight exceeds 1.2 million, the extrusion load is high, making it difficult to form a normal film.

According to an embodiment of the present invention, the polyethylene resin is preferably a single particle in which a low molecular weight polymer having a viscosity average molecular weight of 100,000 g/mol to 400,000 g/mol and a high molecular weight polymer having a viscosity average molecular weight of 1.5 million g/mol to 2.5 million g/mol, are combined.

According to an embodiment of the present invention, the polyethylene resin preferably has a molecular weight distribution (MWD) value of 4 to 7.

According to an embodiment of the present invention, the polyethylene resin is preferably in the form of powder having an average particle diameter of 110 to 140 $\mu$m. When the average particle diameter is less than 110 $\mu$m, the flowability in the extruder hopper decreases, and when the average particle diameter exceeds 140 $\mu$m, the bulk density (B.D) decreases, resulting in a decrease in productivity and poor extrusion.

According to an embodiment of the present invention, the particle size distribution (SPAN) of the polyethylene resin is preferably 1.0 or less. When the particle size distribution (SPAN) is greater than 1.0, the melting property becomes non-uniform in the extruder, thereby increasing the formation of a non-melting gel and resulting in poor flowability in the hopper.

According to an embodiment of the present invention, the density of the polyethylene resin is preferably 0.930 to 0.960 g/cm$^3$.

**<Manufacturing Method for Polyethylene Resin>**

The polyethylene resin or resin powder of the present invention may be prepared through a pulverizing process after polymerizing a polyethylene resin using a catalyst for polymerization of polyethylene according to an embodiment of the present invention.

**Preparation of Catalyst for Polymerization of Polyethylene**

The catalyst for polymerization of polyethylene according to an embodiment of the present invention is prepared by including the following steps: a first step in which a magnesium compound solution is prepared by reacting a magnesium compound, an alcohol, and a hydrocarbon solvent; a second step in which a precursor is prepared by reacting after adding titanium tetrachloride to the magnesium compound solution; and a third step in which a catalyst is prepared by reacting the precursor with a titanium tetrachloride and a carbonyl compound.

The magnesium compound may be a magnesium halide compound, for example, magnesium chloride, for example, magnesium dichloride (MgClz).

The hydrocarbon solvent may be an aliphatic hydrocarbon having 1 to 20 carbon atoms such as pentane, hexane, heptane, octane, decane and kerosene, or an alicyclic hydrocarbon such as cyclopentane, methylcyclopentane, cyclohexane and methylcyclohexane, or benzene, toluene , Xylene, ethylbenzene, cumene and cymene, etc., or halogenated hydrocarbons such as dichloropropane, dichloroethylene, trichloroethylene, carbon tetrachloride and chlorobenzene. For example, the hydrocarbon solvent may be an aromatic hydrocarbon such as toluene.

The kind of alcohol is not particularly limited, but an alcohol having 4 to 20 carbon atoms is preferable. For example, the alcohol may be normal butanol.

The alcohol may be mixed in a ratio of 3 to 7 parts by weight, for example, 3 to 5 parts by weight, on the basis of 1 weight of the magnesium compound. The hydrocarbon solvent may be mixed in a ratio of 9 to 16 parts by weight, for example, 10 to 15 parts by weight, on the basis of 1 weight of the magnesium compound.

The mixing ratio of the magnesium compound and the alcohol, and the mixing ratio of the magnesium compound and the hydrocarbon solvent, determine the viscosity of the entire magnesium compound solution, and the viscosity serves to determine the shape, size, and pore characteristics in the catalyst in forming catalyst particles.

The reaction of the first step may include, after mixing the magnesium compound, a hydrocarbon solvent, and an alcohol, stirring, then raising the temperature to 60 °C to 70 °C for 30 to 90 minutes, and then holding 1 hour 30 minutes to 2 hours 30 minutes.

The second step may be performing a reaction by adding titanium tetrachloride ($TiCl_4$) to the magnesium compound solution after the reaction of the first step. The titanium tetrachloride may be contained in an amount of 3 to 10 parts by weight relative to 1 weight of the magnesium compound solution.

The reaction of the second step may include, after cooling the temperature of the magnesium compound solution to 30°C to 50°C, injecting and stirring the titanium tetrachloride, then raising the temperature to 50 °C to 70 °C for 30 to 90 minutes, and then aging for 30 minutes to 90 minutes. The stirring may be performed at 300 to 400 rpm. The stirring may serve to determine the particle shape, size, and pore characteristics in the catalyst in forming catalyst particles.

Thereafter, when the supernatant is removed by centrifugation, a solid catalyst precursor can be obtained.

The third step may be preparing a catalyst for polymerization of polyethylene by reacting the catalyst precursor, a hydrocarbon solvent, titanium tetrachloride, and a carbonyl compound.

The kind of the hydrocarbon solvent in the third step is not limited, but may be, for example, a linear hydrocarbon solvent having 1 to 10 carbon atoms, preferably hexane.

The titanium tetrachloride in the third step may be mixed in an amount of 3 to 10 weights on the basis of 1 weight of the solid component. The carbonyl compound can be represented by the following general formula (I) or (II):

$$R_1(CO)R_2 .......................... \quad (I)$$

$$R_1(CO)OR_2 ....................... \quad (II)$$

where $R_1$ and $R_2$ are each independently a linear hydrocarbon having 2 to 10 carbon atoms, a cyclic hydrocarbon having 6 to 14 carbon atoms, or an aromatic hydrocarbon having 6 to 14 carbon atoms. For example, the carbonyl compound may be ethyl benzoate. The carbonyl compound may be mixed in an amount of 0.1 to 0.5 parts by weight on the basis of 1 part by weight of the solid component.

The reaction of the third step may include, after mixing the catalyst precursor, the hydrocarbon solvent, the titanium tetrachloride and the carbonyl compound, raising the temperature to 60 °C to 80 °C for 30 to 90 minutes while stirring, and then aging for 1 to 3 hours. Thereafter, when the supernatant is removed by centrifugation, a solid catalyst for polyethylene polymerization can be obtained. The catalyst may be a magnesium-supported titanium catalyst.

## Polymerization of Polyethylene Resin and Preparation of Powder

For another object of the present invention, the present invention provides a method for manufacturing a polyethylene resin for a secondary battery separator in a hexane slurry or heptane slurry, preferably a hexane slurry reactor, in which two or more reactors, including a first reactor and a second reactor, are connected in series, the method comprising the step of transferring polymer particles polymerized in the first reactor to the second reactor so as to form one particle from a polymer formed in the first reactor and a polymer polymerized in the second reactor, wherein the melting point of the polyethylene resin forms a double peak in which a first peak is in the range of 125 °C to 132 °C and a second peak is in the range of 133 °C to 136 °C.

According to an embodiment of the present invention, it is preferable to further include the step of injecting hydrogen by controlling the injection amount thereof, so that the viscosity average molecular weight of the polymer formed in the first reactor is 100,000 g/mol to 400,000 g/mol, as measured and calculated as the viscosity (Intrinsic Viscosity, IV), and the viscosity average molecular weight of the polymer formed in the second reactor is 1.5 million g/mol to 2.5 million g/mol, as measured and calculated as the viscosity (Intrinsic Viscosity, IV).

According to an embodiment of the present invention, it is preferable to further include the step of injecting butene or propylene into the second reactor.

According to an embodiment of the present invention, the molecular weight distribution (MWD) value of the polymer produced in the first reactor is preferably 3 to 6, and the MWD value of the polyethylene resin is preferably 4 to 7.

According to an embodiment of the present invention, the density of the polymer produced in the first reactor is preferably 0.950 to 0.960 g/cm3, and the density of the polyethylene resin is preferably 0.930 to 0.960g/cm3.

The polyethylene resin of the present invention can be prepared by performing a polymerization reaction using the above-described catalyst for polymerization of polyethylene and an organometallic compound as a cocatalyst.

The organometallic compound may be represented by the general formula of MRn. The M may be for example, a metal of Group II or III of the periodic table such as magnesium, calcium, zinc, boron, aluminum, and gallium. The R represents an alkyl group having 1 to 20 carbon atoms such as methyl, ethyl, butyl, hexyl, octyl, and decyl, and n represents the valence of the metal component.

Examples of a more preferable organometallic compound may include an organometallic compound having one or more alkyl groups having 1 to 6 carbon atoms, for example, trialkyl aluminum such as triethyl aluminum, triisobutyl aluminum, etc., and these compounds may be used alone or in mixture.

In some cases, the organometallic compound may be an organoaluminum compound having at least one alkyl group having 1 to 6 carbon atoms and further comprising at least one halogen or hydride group, and examples thereof may include ethyl aluminum dichloride, diethyl aluminum chloride, ethyl aluminum sesquichloride, diisobutyl aluminum hydride, or mixtures thereof.

For example, the cocatalyst, that is, the organometallic compound, may be triethylaluminum.

The polymerization reaction may be carried out by gas phase or bulk polymerization in the absence of an organic solvent, or by a liquid slurry polymerization method in the presence of an organic solvent.

Examples of the organic solvent may include: alkanes or cycloalkanes such as pentane, hexane, heptane, n-octane, isooctane, cyclohexane, and methylcyclohexane; alkylaromatics such as toluene, xylene, ethylbenzene, isopropylbenzene, ethyltoluene, n-propylbenzene, and diethylbenzene; halogenated aromatics such as chlorobenzene, chloronaphthalene, oro-dichlorobenzene; or mixtures thereof. Preferably, the organic solvent may be a hydrocarbon solvent having 4 to 6 carbon atoms, for example, hexane.

The polymerization reaction may be carried out in a reactor equipped with an internal temperature controller, a pressure controller, and a stirrer. Specifically, polyethylene resin may be polymerized by reacting a catalyst for polymerization of polyethylene, a cocatalyst of the organometallic compound, the organic solvent, that is, an inert hydrocarbon solvent, and ethylene, in the reactor.

The polymerization reaction may be carried out under the reaction conditions of a temperature range being 50 °C to 90 °C, for example, 50 °C to 90 °C , a pressure range being 2 kgf / cm$^2$ to 10 kgf / cm$^2$, for example, 3 kgf / cm$^2$ to 8 kgf / cm$^2$, and a residence time of being 1 hour to 3 hours.

When the temperature is less than 50° C, the activity is lowered and the desired particle size cannot be obtained, and when the temperature exceeds 90° C, the powder particles become non-uniform due to heat generation caused by local over-polymerization, resulting in a lower bulk density. Even when the pressure is less than 2 kgf/cm$^2$, the activity is lowered and the desired particle size cannot be obtained.

When the residence time is less than 1 hour, the desired particle size cannot be obtained, and when the residence time exceeds 3 hours, the particle size may become too large or the productivity is lowered.

In the present invention, the reaction is carried out in series-connected reactors in which hydrogen/ethylene concentrations are differently adjusted to control the molecular weight distribution of polyethylene resin, and additional alpha olefins can be injected. Ethylene, an inert hydrocarbon solvent, a catalyst, and a cocatalyst are injected into the first reactor, and the slurry produced through the polymerization process in the first reactor is injected into the second reactor through a transfer pipe. In the second reactor, ethylene and hexane are additionally selectively injected through another pipe to undergo the polymerization process once more. In the second reactor, in addition to ethylene, alpha olefins are injected as comonomers. Thereafter, the slurry is transferred to a degassing process through a pipe for discharging the produced polymer. After the degassing process, in the separation process, it is separated into an inert hydrocarbon solvent and ultra-high molecular weight polyethylene, and finally subjected to a drying process to produce ultra-high molecular weight polyethylene in the form of powder. In each reactor, hydrogen may be injected as a molecular weight modifier to obtain a target molecular weight.

The range of the temperature, pressure and residence time of the polymerization reaction can be made to have the above-described characteristics of the produced polyethylene resin powder of the present invention. As a result, during extrusion processing, a rapid and uniform melting of the oil and powder mixture is induced in the extruder to make the extrusion amount uniform, thereby improving the mechanical strength of the porous film for a separator as the final product.

In order to achieve another object of the present invention, the present invention provides a separator to which the polyethylene resin according to the present invention or the polyethylene resin manufactured by the method according to the present invention is applied.

In order to achieve another object of the present invention, the present invention provides a secondary battery to which the separator according to the present invention is applied.

## [Example Method]

### Reaction Pressure (kgf/cm$^2$g)

The reaction pressure was measured using a pressure gauge installed in the reactor.

### Retention Time (RT) (hr)

The average residence time was calculated by dividing the total volume of the reaction solution in the reactor by the injection rates of ethylene and hexane.

## [Polymer Analysis]

### Measurement Method of Molecular Weight

The molecular weight (MW) was calculated from the intrinsic viscosity [η] according to ASTM D 4020.

For polymers, the viscosity can provide useful information in lean solutions. It is assumed that the value obtained by dividing the viscosity of the polymer by the viscosity and the concentration of the solution is called a specific viscosity, and when the concentration of the polymer goes to zero, the extrapolated value of the specific viscosity is defined as the intrinsic viscosity (IV). Since the IV value is mainly influenced by the size of the polymer, the linear polymer has a high correlation with the molecular weight, and in the case of ultra-high molecular weight polyethylene, the Margolies equation is widely used.

$$Mw = 5.37 \times 10^4 \times [\eta]^{1.49}$$

Mw = average molecular weight (g/mol)
[η] = intrinsic viscosity (dl/g)

### Measurement Method of Intrinsic Viscosity

The intrinsic viscosity was measured according to ISO 1628-1 after dissolving for 70 minutes (1.2 hours) in a decalin solution at 135°C.

### Measurement Method of Bulk Density

The bulk density was measured according to ASTM D1895-96.

### Particle Size Distribution (SPAN)

The average particle size of the polymer was measured according to ISO13320-2 using a polymer particle analyzer (MALVERN MASTER SIZE X PARTICLE ANALYSER). The average particle size was expressed as D(v,0.5), and the particle size distribution (span) was expressed as (D(v,0.9)-D(v,0.1))/D(v,0.5). Here, D(v,0.5) represents the particle size represented by 50% of the sample, and D(v,0.9) and D(v,0.1) represent the particle size represented by 90% and 10% of the sample, respectively. The smaller the number of distributions, the narrower the distribution.

### Melting Temperature (Tm) (°C)

The melting temperature was measured using a DSC instrument. After removing the thermal history by raising the temperature to 200 °C, maintaining an isothermal state for 10 minutes and lowering the temperature to 30 °C at a rate of 10°C per minute, Tm was measured by raising the temperature to 200 °C at a rate of 10 °C per minute.

**High Load Melt Flow Index (HLMI)**

The high load melt flow index was measured at 190° C with a load of 21.6 kg according to ASTM D1238.

**Density**

The density was measured according to ASTM D1505.

**Manufacture of Porous Separator**

The separator for a secondary battery using the polyethylene resin powder can be easily manufactured by a person skilled in the art according to a method known in the art. For example, after evenly mixing the prepared polyethylene resin powder, primary antioxidant, secondary antioxidant and neutralizing agent, the resulting mixture can be processed using a twin screw extruder. A certain amount of the powder is injected from the hopper through a feeder, and oil may be injected in proportion to the input amount. The oil may be injected at the front of the extruder so that the ratio of oil: powder is 5.5: 4.5 to 7: 3.

By controlling the extrusion speed, etc. in the extruder and stretching, a sheet-like porous film having a predetermined thickness can be manufactured. In this process, the oil and the resin cause phase separation and pores are formed in the film. As an example, the oil of the manufactured film may pass through a water tank containing methylene chloride (MC) and undergo a drying process to prepare a final porous separator film.

**[Film Formation for Porous Secondary Battery]**

To the prepared ultra-high molecular polyethylene resin powder were added 500 ppm of Iganox 1010 as a primary antioxidant, 500 ppm of Iganox 1680 as a secondary antioxidant, and 2000 ppm of Ca-stearate as a neutralizing agent and evenly mixed using a Henschel mixer, and then processed using a twin-screw extruder. A certain amount of powder was injected from the hopper through a feeder, and in proportion to the amount, oil was injected at the front of the extruder so that the ratio of oil: powder was 7:3. The extruder has a length/diameter ratio (L/D) of 56 and a die width of 400 mm. The processing temperature was 210 °C. The extrusion speed was 0.65 m/min, and the thickness of the sheet was constantly adjusted by passing through the casting roll at the rear end of the die, and then, the roll speed was adjusted through the MDO (Machine direction orientation) unit to extend 6 times. Thereafter, the sheet-like film was stretched four times in the transverse direction while passing through a transverse direction orientation (TDO) unit. The thickness of the final stretched film was 12 $\mu$m. In this process, the oil and the resin cause phase separation and pores are formed in the film. The oil of the prepared film was removed in the process of passing through a tank containing methylene chloride (MC), and the film was dried to complete the final porous separator film. The tensile strength, elongation and pin puncture mechanical strength of the film were measured.

**Extrusion Pressure (bar)**

The value indicated on a pressure gauge installed on the extruder was recorded by using a twin-screw extruder (TEK30 manufactured by SM Platek).

**Torque (Nm)**

The value indicated on a controller of the twin-screw extruder (TEK30 manufactured by SM Platek) was recorded.

**Thickness ($\mu$m)**

The thickness of the film was measured according to ASTM D374.

**Porosity**

A porous film was cut in width/length of 50 m, and the thickness and weight thereof were measured to calculate the density. That is, the volume was measured by width $\times$ length $\times$ thickness, and the density ($\rho 1$) is calculated by dividing the measured weight by the volume. The porosity (P) was calculated by the following equation through the true density ($\rho 0$) of the resin and the film density ($\rho 1$) measured above. The true density of polyethylene identified in the present invention was 0.946 g/cm$^3$.

$$P(\%) = (\rho_0 - \rho_1)/ \rho_0 \times 100$$

**Gurley Transmittance (sec/100 ml)**

The time (in seconds) taken for 100 mL of air to pass through a microporous film of 1 square inch (inch$^2$) under a constant pressure of 4.8 inch $H_2O$ at room temperature was measured according to ASTM D726.

**Pin Puncture Strength (g)**

The pin puncture strength was measured at a rate of 10 mm/sec using a tip having a diameter of 1 mm at the distal end using a KES-G5 instrument manufactured by Kato Tech, Japan, according to ASTM D-4833.

**Tensile Strength (kgf/cm2)**

The tensile strength was measured by an Instron universal testing machine (UTM) according to ASTM D3763.

**Elongation (%)**

Standard points were marked on a specimen, and the elongation was calculated by dividing the distance at break in measuring the tensile strength by the distance between the standard points.

Hereinafter, example embodiments of the present invention will be described in detail, but the following examples are provided only to aid understanding of the present invention.

**Example 1**

**[Preparation of Solid Catalyst for Polyethylene Polymerization]**

**Step 1: Preparation of Magnesium Halide Compound Solution**

After replacing a 1L-reactor equipped with a mechanical stirrer with a nitrogen atmosphere, 25 g of magnesium dichloride ($MgCl_2$), 300 ml of toluene, and 100 ml of normal butanol were added, and the temperature was raised to 65 °C for 1 hour while stirring, and then maintained for 2 hours, thereby obtaining a uniform magnesium halide compound solution.

**Step 2: Preparation of Solid Complex Titanium Catalyst**

After cooling the temperature of the solution prepared in the first step to 40 °C, 70 ml of $TiCl_4$ was slowly injected for 1 hour. When the injection was completed, the mixture was stirred at 350 rpm, the temperature of the reactor was raised to 60 °C for 1 hour, and aged for an additional 1 hour. When all the processes were completed, the reactor was allowed to stand to completely settle the solid component to remove the supernatant, and then the solid component in the reactor was washed with 200 ml of hexane. 200 ml of hexane, 60 ml of $TiCl_4$, and 8 ml of ethyl benzoate were added to the solid component, followed by stirring at 350 rpm while raising the temperature of the reactor to 70 °C for 1 hour and then aging for 2 hours. When all the processes were completed, the reactor was allowed to stand to completely settle the solid component, and then the supernatant was removed. The prepared solid catalyst was washed 6 times with 200 ml of hexane.

**[Polymerization of Polyethylene Resin: Series Polymerization]**

Two 150 liter CSTR reactors (first and second reactors) equipped with an internal temperature controller, a pressure controller, and a stirrer were connected in series and subjected to continuous polymerization. Ethylene 2.5 kg/hr, hexane 22.5 kg/hr, and the prepared catalyst were continuously injected into the first reactor in the range of 0.1 to 0.2 g/hr depending on the activity, and stirred at 180 rpm. The injection amount of hexane was adjusted so that the reaction residence time became 2 hours. Hydrogen for molecular weight control was injected by controlling the injection amount thereof by measuring HLMI (High Load Melt Index). The injection amount was 1.5 g/hr. In addition, triethylaluminum dissolved in 11 wt% of hexane was used as a co-catalyst. The discharge and liquid level were controlled so that the reactant in the first reactor was 70 liters. The hexane slurry continuously discharged was transferred to the second reactor connected in series, and the liquid level was controlled to maintain the same reaction volume and residence time in the second reactor, and 1.5 kg/hr of ethylene was injected to continue polymerization. Hydrogen, which is a molecular weight modifier, was not additionally injected into the first and second reactors. The reaction temperature was maintained at 80° C for both the first and second reactors, and the reaction pressures were maintained at 5 kgf/cm2 and 2.5 kgf/cm2, respectively. Propylene as a comonomer was injected into the second reactor at an injection amount of 15 g/hr for Tm control. The slurry solution continuously discharged by the liquid level control went through a degassing process and then a separation process to produce ultra-high molecular weight polyethylene powder in the form of a wet cake. Thereafter, ultra-high molecular weight polyethylene was produced as a powder in the form of particles through a continuous drying process.

The polymerization activity was 20 kg-PE/g-catalyst. The polymerization activity (kg-PE/g-catalyst) was calculated as the weight ratio of the resulting polymer per amount of catalyst used.

The intrinsic viscosity of the polymer can be calculated by dissolving the polymer by using a decahydronaphthalene solvent according to ISO 1628 Part 3 and measuring the relative viscosity, and then extrapolating the relative viscosity value to the value when the concentration is 0. The Mw was calculated by applying the measured IV value to the Margolies equation.

The molecular weight of only the polymer produced in the second reactor was calculated as an arithmetic average using the fraction of the ethylene injection amount at each stage from the molecular weight of the polymer sampled in the first reactor and the molecular weight of the final polymer.

$$Mw\_1 * W\_1 + Mw\_2 * W\_2 = Mw$$

Mw_1: Molecular weight of polymer polymerized in first reactor (measured sample value)

W_2: Second reactor polymerization fraction (ethylene injection amount fraction)

Mw: Molecular weight of final obtained polymer (measured value)

W_1: Polymerization fraction of first reactor (fraction of ethylene injection amount)

Mw_2: Molecular weight of polymer polymerized in second reactor (calculated)

The melting temperature was measured using a DSC instrument. The molecular weight distribution of the polymer was determined from Mw/Mn by measuring Mw and Mn using GPC.

**[Film Formation for Porous Secondary Battery]**

To the prepared ultra-high molecular polyethylene resin powder were added 2000 ppm of Iganox 1010 as a primary antioxidant and 600 ppm of Ca-stearate as a neutralizing agent, and evenly mixed using a Henschel mixer, and then processed using a twin screw extruder. A certain amount of powder was injected from the hopper through a feeder, and in proportion to the amount, oil was injected at the front of the extruder so that the ratio of oil: powder was 7:3. The extruder has a length/diameter ratio (L/D) of 56 and a die width of 400 mm. The processing temperature was processed to 210 °C. The extrusion speed was 0.65m/min, and the thickness of the sheet was constantly adjusted by passing through the casting roll at the rear end of the die. Then, the roll speed was adjusted through the MDO (Machine direction orientation) unit to extend 6 times. Thereafter, the sheet was stretched four times in the transverse direction while passing through a transverse direction orientation (TDO) unit. The thickness of the final stretched film was 12 μm. In this process, the oil and the resin caused phase separation and pores were formed in the film. The oil of the prepared film was removed in the process of passing through a tank containing methylene chloride (MC), and the film was dried to complete the final porous separator film.

The tensile strength, elongation and pin puncture mechanical strength of the film were measured.

**Example 2**

A catalyst was prepared in the same manner as in Example 1. Polymerization was carried out under the same polymerization conditions as Example 1, except that the hydrogen injection amount in the first polymerization reactor was changed to 10 g/hr in Example 1. A porous film was formed under the same molding conditions as in Example 1.

### Example 3

A catalyst was prepared in the same manner as in Example 1. Polymerization was carried out under the same polymerization conditions as Example 1, except that the hydrogen injection amount in the first polymerization reactor was changed to 1.0 g/hr in Example 1. A porous film was formed under the same molding conditions as in Example 1.

### Example 4

A catalyst was prepared in the same manner as in Example 1. Polymerization was carried out under the same polymerization conditions as Example 1, except that the hydrogen injection amount in the first polymerization reactor was changed to 0.5 g/hr in Example 1. A porous film was formed under the same molding conditions as in Example 1.

### Example 5

A catalyst was prepared in the same manner as in Example 1. Polymerization was carried out under the same polymerization conditions as Example 1, except that the reaction temperature of the second polymerization reactor was lowered to 70 °C in Example 1. A porous film was formed under the same molding conditions as in Example 1.

### Example 6

A catalyst was prepared in the same manner as in Example 1. Polymerization was carried out under the same polymerization conditions as Example 1, except that hydrogen 0.4 g/hr, which is a molecular weight modifier, was injected into the first polymerization reactor, and hydrogen 0.3 g/hr was injected into the second-stage polymerization reactor in Example 1. A porous film was formed under the same molding conditions as in Example 1.

### Comparative Example 1

A catalyst was prepared in the same manner as in Example 1. Polymerization was carried out under the same polymerization conditions as Example 1, except that propylene 10 g/hr as a comonomer was injected into the first polymerization reactor and of propylene 15 g/hr into the second stage reactor in Example 1. A porous film was formed under the same molding conditions as in Example 1.

### Comparative Example 2

A catalyst was prepared in the same manner as in Example 1. Polymerization was carried out under the same polymerization conditions as Example 1, except that propylene as a comonomer was not injected into the second polymerization reactor in Example 1. A porous film was formed under the same molding conditions as in Example 1.

### Comparative Example 3

A catalyst was prepared in the same manner as in Example 1. A polymerization reaction having different reaction conditions was carried out alone using only the first polymerization reactor of the two series-connected reactors, to obtain polyethylene powder individually, and then the two powders were uniformly mixed in a ratio of 1:1. The first reaction was carried out under the same condition as in the first polymerization reactor in Example 1, except that the injection amount of hydrogen was 10 g/hr. Hydrogen injection was not performed in the second reactor, and the reaction was performed in the same manner as in Example 1, except that propylene 15 g/hr was injected. The mixed powder was molded into a porous film under the same molding conditions as in Example 1. The polymerization conditions and polymer analysis values of Examples and Comparative Examples are summarized in Table 1. Table 2 summarizes the extruder pressure, torque, and properties of the resulting separator film during extrusion and stretching processing for manufacturing porous film using the polymers of Examples and Comparative Examples.

[Table 1]

| | Example | | | | | | Comparative Example | | Comparative Example 3 | |
|---|---|---|---|---|---|---|---|---|---|---|
| | 1 | 2 | 3 | 4 | 5 | 6 | 1 | 2 | | |
| Polymerizati on condition | series | | | | | | | | Physical blend | |
| First reactor temperature (°C) | 80 | 80 | 80 | 80 | 80 | 80 | 80 | 80 | 80 | 80 |
| Second reactor temperature (°C) | 80 | 80 | 80 | 80 | 70 | 80 | 80 | 80 | | |
| First reactor hydrogen injection amount (g/hr) | 1.5 | 10 | 1 | 0.5 | 1.5 | 0.4 | 1.5 | 1.5 | 10 | 0 |
| Second reactor hydrogen injection amount (g/hr) | 0 | 0 | 0 | 0 | 0 | 0.3 | 0 | 0 | | |
| First reactor propylene injection amount (g/hr) | 0 | 0 | 0 | 0 | 0 | 0 | 10 | 0 | 0 | 15 |
| Second reactor propylene injection amount (g/hr) | 15 | 15 | 15 | 15 | 15 | 15 | 15 | 0 | | |
| First reactor polymer molecular weight (Mw) | 256, 981 | 10,520 | 365,62 0 | 532,86 5 | 326,98 2 | 856,95 0 | 278,560 | 256,98 5 | 11,62 3 | 1,562, 354 |
| Second reactor molecular weight (Mw) | 2,30 9,25 8 | 2,202,9 92 | 1,781,3 61 | 1,421,0 49 | 2,806,6 97 | 934,31 5 | 1,870,920 | 1,962,4 20 | | |
| Final polymer molecular weight (Mw) | 1,02 6,58 5 | 832,69 7 | 896,52 3 | 865,93 4 | 1,256,8 75 | 885,96 2 | 875,695 | 896,52 3 | 802,569 | |
| First reactor polymer melting temperature | 134. 1 | 134.2 | 133.9 | 134.0 | 134.1 | 134.1 | 132.5 | 134.2 | 134 | 128.9 |
| (°C) | | | | | | | | | | |
| Final polymer melting temperature (°C) | 134. 0 | 134.1 | 133.7 | 133.8 | 133.9 | 133.8 | 132.3 | 134.0 | 134.5 and 128.9 | |
| | 128. 3 | 12.8.4 | 128.5 | 128.5 | 128.4 | 128.5 | 128.3 | 134.4 | | |
| First reactor polymer MWD | 4.2 | 4.8 | 4.3 | 4.5 | 4.6 | 4.6 | 4.7 | 4.8 | 4..8 | 4.7 |

(continued)

| | Example | | | | | | Comparative Example | | Comparative Example 3 | |
|---|---|---|---|---|---|---|---|---|---|---|
| | 1 | 2 | 3 | 4 | 5 | 6 | 1 | 2 | | |
| Polymerizati on condition | series | | | | | | | | Physical blend | |
| Final polymer MWD | 5.8 | 6.1 | 5.7 | 5.6 | 5.8 | 4.8 | 6.0 | 5.7 | 6.1 | |
| APS | 115 | 118 | 116 | 113 | 120 | 122 | 120 | 118 | 125 | |
| Span | 0.95 | 0.93 | 0.92 | 0.95 | 0.98 | 0.96 | 0.98 | 0.95 | 1.15 | |
| Primary polymer density | 0.95 50 | 0.9620 | 0.9520 | 0.9510 | 0.9520 | 0.9480 | 0.9520 | 0.9520 | 0.962 0 | 0.928 0 |
| Final polymer density | 0.93 95 | 0.9440 | 0.9404 | 0.9408 | 0.9395 | 0.9375 | 0.9404 | 0.9403 | 0.9450 | |

※ In Examples 1 to 6, Tm was measured on one particle, whereas in Comparative Example 3, Tm was measured on two particles. That is, in Examples, a double Tm peak was measured in one particle, but in Comparative Example 1, only one peak was measured for each particle. As a result, it can be seen that the particles according to the present invention are formed of one particle and have a double Tm.

※ In Comparative Examples 1 and 2, each of the double Tm peaks was measured, but both were out of the desirable range.

[Table 2]

| | Example | | | | | | Comparative Example | | Comparative Example 3 |
|---|---|---|---|---|---|---|---|---|---|
| | 1 | 2 | 3 | 4 | 5 | 6 | 1 | 2 | |
| Extrusion pressure (bar) | 50 | 53 | 52 | 58 | 68 | 64 | 55 | 60 | 80 |
| Torque (Nm) | 25 | 26 | 28 | 35 | 37 | 37 | 30 | 39 | 36 |
| Thickness ($\mu$m) | 11.7 | 11.6 | 11.3 | 11.5 | 11.6 | 11.5 | 11.8 | 11.3 | 11.6 |
| Porosity (%) | 56.5 | 60.1 | 52.8 | 55.5 | 52.5 | 43.5 | 65.2 | 55.3 | 65.2 |
| Gurley transmittance (sec/100ml) | 105 | 106 | 133 | 135 | 115 | 118 | 120 | 126 | 128 |
| Pin puncture (g) | 590 | 557 | 615 | 570 | 610 | 610 | 460 | 550 | 555 |
| MD direction tensile strength (kgf/cm$^2$) | 1760 | 1600 | 1940 | 1890 | 1950 | 1750 | 1580 | 1650 | 1820 |
| TD direction tensile strength (kgf/cm$^2$) | 1860 | 1780 | 2180 | 2150 | 2050 | 1810 | 1850 | 1750 | 2160 |
| MD direction elongation (%) | 95 | 80 | 125 | 90 | 95 | 110 | 110 | 120 | 132 |
| TD direction elongation (%) | 75 | 60 | 85 | 92 | 90 | 80 | 60 | 70 | 93 |

When comparing Examples 1 to 6, in Comparative Example 3, the porosity is relatively high, but the transmittance (the time taken for a constant flow rate) is high, indicating that the pores are not uniformly formed.

When comparing Examples 1 and 2, in Example 2 in which the molecular weight is low, it can be seen that the extrusion pressure is low and the workability is increased, but the pin puncture strength is relatively low and the tensile strength and elongation are relatively low, so that the physical properties are deteriorated. However, compared with Comparative Example 1, Example 2 exhibits relatively superior physical properties.

When comparing Examples 1 and 3, both belonging to the desirable ranges, the pin puncture, workability, thickness, and porosity in both examples are all excellent.

When comparing Examples 1 and 4, in Example 4 in which the molecular weight of the low molecular weight polymer is out of the desirable range, the workability may be relatively worse and physical properties may be relatively non-uniform, compared to Example 1.

When comparing Examples 1 and 5, in Example 5 in which the molecular weights of two-stage polymers are high and thus the total molecular weight is out of the desirable range, the workability may be relatively worse and the physical properties may be relatively non-uniform, compared to Example 1. However, the workability of Example 5 is relatively high, compared to Comparative Example 1 in which the two-stage polymers are simply mixed. In addition, the balance of physical properties is inferior to that of Example 1, but the pin puncture value is high and is superior to Comparative Example 1 in which the polymers are simply mixed, and the non-uniformity is also superior to Comparative Example 1.

When comparing Examples 1 and 6, since a double Tm peak appears from one polyethylene resin particle, desirable properties are exhibited. However, the molecular weight distribution is narrow because the molecular weights of the low molecular weight polymer and the high molecular weight polymer, both being out of the molecular weight ranges, are similar, and thus the workability is relatively poor.

When comparing Example 1 and Comparative Example 1, in Comparative Example 1 in which propylene is injected into the first reactor as well, the workability and porosity become increased, but the mechanical strength is lowered, compared to Example 1.

When comparing Example 1 and Comparative Example 2 in which propylene is not injected into the first and second reactors, the melting behavior deteriorates, resulting in non-uniform physical properties of the final product.

**Claims**

1. A polyethylene resin for a secondary battery separator, wherein the polyethylene resin is a single particle, and the polyethylene resin is composed of a first reactor polymer which is a homopolymer and a respective second reactor polymer which is a copolymer, which respective polymers are produced in a first reactor and a respective second reactor which are connected to each other in series to perform a continuous polymerization which results in the formation of single particles of the polyethylene resin, wherein the homopolymer is a homopolymer of polyethylene and the copolymer is a copolymer of polyethylene with propylene or butene,

   wherein the first an second reactor are hexane slurry or heptane slurry reactors, and wherein in the first reactor a low molecular weight homopolymerization is performed,
   further wherein the first reactor polymer is a low molecular weight polymer having a viscosity average molecular weight of 100,000 g/mol to 400,000 g/mol, which is calculated from the intrinsic viscosity (IV) according to ASTM D 4020, and wherein the intrinsic viscosity is measured according to ISO 1628-1 after dissolving for 70 minutes (1.2 hours) in a decalin solution at 135°C,
   and the second reactor polymer is a high molecular weight polymer having a viscosity average molecular weight of 1.5 million g/mol to 2.5 million g/mol, which is calculated from the intrinsic viscosity (IV) according to ASTM D 4020, and wherein the intrinsic viscosity is measured according to ISO 1628-1 after dissolving for 70 minutes (1.2 hours) in a decalin solution at 135°C,
   and the polyethylene resin has a melting point exhibiting a double peak in which a first peak is in the range of 125 °C to 132 °C and a second peak is in the range of 133 °C to 136 °C,
   wherein the melting temperature was measured using a DSC instrument, and by initially raising the temperature to 200 °C, maintaining an isothermal state for 10 minutes and lowering the temperature to 30 °C at a rate of 10°C per minute, and subsequently measuring the melting temperature while raising the temperature to 200 °C at a rate of 10 °C per minute,
   **characterized in that** the viscosity average molecular weight of the polyethylene resin is 500,000 g/mol to 1.2 million g/mol, which is calculated from the intrinsic viscosity (IV) according to ASTM D 4020, and wherein the intrinsic viscosity is measured according to ISO 1628-1 after dissolving for 70 minutes (1.2 hours) in a decalin solution at 135°C.

2. The polyethylene resin of claim 1, wherein the polyethylene resin preferably has a molecular weight distribution (MWD) value of 4 to 7, which is determined from Mw/Mn by measuring Mw and Mn using GPC.

3. The polyethylene resin of claim 1 or 2, wherein the polyethylene resin is in the form of powder and has an average particle diameter D(v,0.5) of 110 to 140 $\mu$m, which is measured according to ISO13320-2 using a polymer particle analyzer.

4. The polyethylene resin of claim 3, wherein the polyethylene resin preferably has a particle size distribution (SPAN) of 1.0 or less, expressed as {D(v,0.9) - D(v, 0.1)} / D(v,0.5).

5. The polyethylene resin of any of claims 1-4, wherein the polyethylene resin has a density of 0.930 to 0.960g/cm$^3$, which is measured according to ASTM D1895-96.

6. A method for manufacturing a polyethylene resin for a secondary battery separator in a hexane slurry or heptane slurry reactor in which two or more reactors are connected in series, including a first reactor and a second reactor, the method comprising the step of continuously polymerizing the polymer formed in the first reactor which is a homopolymer of polyethylene and the polymer polymerized in the second reactor which is a copolymer of polyethylene with propylene or butene so as to form single particles, further comprising the step of injecting butene or propylene into the second reactor,

   wherein the first an second reactor are hexane slurry or heptane slurry reactors, and wherein in the first reactor a low molecular weight homopolymerization is performed,
   further comprising the step of injecting hydrogen by controlling the injection amount thereof, so that the viscosity average molecular weight of the polymer formed in the first reactor is 100,000 g/mol to 400,000 g/mol, which is calculated from the intrinsic viscosity (IV) according to ASTM D 4020, and wherein the intrinsic viscosity is measured according to ISO 1628-1 after dissolving for 70 minutes (1.2 hours) in a decalin solution at 135°C, and the viscosity average molecular weight of the polymer formed in the second reactor is 1.5 million g/mol to 2.5 million g/mol, which is calculated from the intrinsic viscosity (IV) according to ASTM D 4020, and wherein the intrinsic viscosity is measured according to ISO 1628-1 after dissolving for 70 minutes (1.2 hours) in a decalin solution at 135°C,

wherein the melting point of the polyethylene resin forms a double peak in which a first peak is in the range of 125 °C to 132 °C and a second peak is in the range of 133 °C to 136 °C,

wherein the melting temperature was measured using a DSC instrument, and by initially raising the temperature to 200 °C, maintaining an isothermal state for 10 minutes and lowering the temperature to 30 °C at a rate of 10°C per minute, and subsequently measuring the melting temperature while raising the temperature to 200 °C at a rate of 10 °C per minute,

**characterized in that** the viscosity average molecular weight of the polyethylene resin is 500,000 g/mol to 1.2 million g/mol, which is calculated from the intrinsic viscosity (IV) according to ASTM D 4020, and wherein the intrinsic viscosity is measured according to ISO 1628-1 after dissolving for 70 minutes (1.2 hours) in a decalin solution at 135°C.

7. The method of claim 6, wherein the molecular weight distribution (MWD) value of the polymer formed in the first reactor is 3 to 6, and the MWD value of the polyethylene resin is 4 to 7 , wherein the MWD value is determined from Mw/Mn by measuring Mw and Mn using GPC.

8. The method of claim 6 or 7, wherein the density of the polymer formed in the first reactor is 0.950 to 0.960 g/cm3, and the density of the polyethylene resin is 0.930 to 0.960 g/cm3 , which are measured according to ASTM D1895-96..

9. A separator for a secondary battery, to which the polyethylene resin according to any one of claims 1 to 5 or the polyethylene resin manufactured by the manufacturing method of any one of claims 6 to 8 is applied.

**Patentansprüche**

1. Polyethylenharz für einen Sekundärbatterie-Separator, wobei das Polyethylenharz ein einzelnes Teilchen ist und das Polyethylenharz aus einem ersten Reaktorpolymer, das ein Homopolymer ist, und einem entsprechenden zweiten Reaktorpolymer, das ein Copolymer ist, zusammengesetzt ist, wobei die jeweiligen Polymere in einem ersten Reaktor und einem jeweiligen zweiten Reaktor hergestellt werden, die miteinander in Reihe verbunden sind, um eine kontinuierliche Polymerisation durchzuführen, die zu der Bildung einzelner Teilchen des Polyethylenharzes führt, wobei das Homopolymer ein Homopolymer von Polyethylen ist und das Copolymer ein Copolymer von Polyethylen mit Propylen oder Buten ist,

wobei der erste und der zweite Reaktor Hexan- oder Heptan-Aufschlämmungsreaktoren sind und wobei in dem ersten Reaktor eine Homopolymerisation mit niedrigem Molekulargewicht durchgeführt wird, ferner wobei das erste Reaktorpolymer ein Polymer mit niedrigem Molekulargewicht mit einem viskositätsmittleren Molekulargewicht von 100.000 g/mol bis 400.000 g/mol ist, das aus der intrinsischen Viskosität (IV) gemäß ASTM D 4020 berechnet wird, und wobei die intrinsische Viskosität gemäß ISO 1628-1 nach Auflösen für 70 Minuten (1,2 Stunden) in einer Dekalinlösung bei 135 °C gemessen wird,

und das zweite Reaktorpolymer ein Polymer mit hohem Molekulargewicht mit einem viskositätsmittleren Molekulargewicht von 1,5 Millionen g/mol bis 2,5 Millionen g/mol ist, das aus der intrinsischen Viskosität (IV) gemäß ASTM D 4020 berechnet wird, und wobei die intrinsische Viskosität gemäß ISO 1628-1 nach Auflösen für 70 Minuten (1,2 Stunden) in einer Dekalinlösung bei 135 °C gemessen wird,

und das Polyethylenharz einen Schmelzpunkt mit einem Doppelpeak aufweist, wobei ein erster Peak in dem Bereich von 125 °C bis 132 °C und ein zweiter Peak in dem Bereich von 133 °C bis 136 °C liegt,

wobei die Schmelztemperatur unter Verwendung eines DSC-Instruments gemessen wurde, und durch anfängliches Erhöhen der Temperatur auf 200 °C, Aufrechterhalten eines isothermen Zustands für 10 Minuten und Absenken der Temperatur auf 30 °C mit einer Rate von 10 °C pro Minute und anschließendes Messen der Schmelztemperatur während des Erhöhens der Temperatur auf 200 °C mit einer Rate von 10 °C pro Minute,

**dadurch gekennzeichnet, dass** das viskositätsmittlere Molekulargewicht des Polyethylenharzes 500.000 g/mol bis 1,2 Millionen g/mol beträgt, das aus der intrinsischen Viskosität (IV) gemäß ASTM D 4020 berechnet wird, und wobei die intrinsische Viskosität gemäß ISO 1628-1 nach Auflösen für 70 Minuten (1,2 Stunden) in einer Dekalinlösung bei 135 °C gemessen wird.

2. Polyethylenharz nach Anspruch 1, wobei das Polyethylenharz vorzugsweise einen Wert der Molekulargewichtsverteilung (MWD) von 4 bis 7 aufweist, der aus Mw/Mn durch Messen von Mw und Mn unter Verwendung von GPC bestimmt wird.

3. Polyethylenharz nach Anspruch 1 oder 2, wobei das Polyethylenharz in Form von Pulver vorliegt und einen durchschnittlichen Teilchendurchmesser D(v,0,5) von 110 bis 140 μm aufweist, der gemäß ISO 13320-2 unter Verwendung eines Polymerteilchenanalysators gemessen wird.

4. Polyethylenharz nach Anspruch 3, wobei das Polyethylenharz vorzugsweise eine Teilchengrößenverteilung (SPAN) von 1,0 oder weniger aufweist, ausgedrückt als {D(v,0,9) - D(v,0,1)} / D(v,0,5).

5. Polyethylenharz nach einem der Ansprüche 1 bis 4, wobei das Polyethylenharz eine Dichte von 0,930 bis 0,960 g/cm$^3$ aufweist, die gemäß ASTM D1895-96 gemessen wird.

6. Verfahren zum Herstellen eines Polyethylenharzes für einen Sekundärbatterie-Separator in einem Hexan- oder Heptan-Aufschlämmungsreaktor, in dem zwei oder mehr Reaktoren in Reihe geschaltet sind, einschließlich eines ersten Reaktors und eines zweiten Reaktors, das Verfahren umfassend den Schritt des kontinuierlichen Polymerisierens des in dem ersten Reaktor gebildeten Polymers, das ein Homopolymer von Polyethylen ist, und des in dem zweiten Reaktor polymerisierten Polymers, das ein Copolymer von Polyethylen mit Propylen oder Buten ist, sodass einzelne Teilchen gebildet werden, ferner umfassend den Schritt des Einspritzens von Buten oder Propylen in den zweiten Reaktor,

wobei der erste und der zweite Reaktor Hexan- oder Heptan-Aufschlämmungsreaktoren sind und wobei in dem ersten Reaktor eine Homopolymerisation mit niedrigem Molekulargewicht durchgeführt wird, ferner umfassend den Schritt des Injizierens von Wasserstoff durch Steuern der Injektionsmenge desselben, sodass das viskositätsmittlere Molekulargewicht des in dem ersten Reaktor gebildeten Polymers 100.000 g/mol bis 400.000 g/mol beträgt, das aus der intrinsischen Viskosität (IV) gemäß ASTM D 4020 berechnet wird, und wobei die intrinsische Viskosität gemäß ISO 1628-1 nach Auflösen für 70 Minuten (1,2 Stunden) in einer Dekalinlösung bei 135 °C gemessen wird, und das viskositätsmittlere Molekulargewicht des in dem zweiten Reaktor gebildeten Polymers 1,5 Millionen g/mol bis 2,5 Millionen g/mol beträgt, was aus der intrinsischen Viskosität (IV) gemäß ASTM D 4020 berechnet wird, und wobei die intrinsische Viskosität gemäß ISO 1628-1 nach Auflösen für 70 Minuten (1,2 Stunden) in einer Decalinlösung bei 135 °C gemessen wird,
wobei der Schmelzpunkt des Polyethylenharzes einen Doppelpeak bildet, bei dem ein erster Peak in dem Bereich von 125 °C bis 132 °C liegt und ein zweiter Peak in dem Bereich von 133 °C bis 136 °C liegt,
wobei die Schmelztemperatur unter Verwendung eines DSC-Instruments gemessen wurde, und durch anfängliches Erhöhen der Temperatur auf 200 °C, Aufrechterhalten eines isothermen Zustands für 10 Minuten und Absenken der Temperatur auf 30 °C mit einer Rate von 10 °C pro Minute und anschließendes Messen der Schmelztemperatur während des Erhöhens der Temperatur auf 200 °C mit einer Rate von 10 °C pro Minute, **dadurch gekennzeichnet, dass** das viskositätsmittlere Molekulargewicht des Polyethylenharzes 500.000 g/mol bis 1,2 Millionen g/mol beträgt, das aus der intrinsischen Viskosität (IV) gemäß ASTM D 4020 berechnet wird, und wobei die intrinsische Viskosität gemäß ISO 1628-1 nach Auflösen für 70 Minuten (1,2 Stunden) in einer Dekalinlösung bei 135 °C gemessen wird.

7. Verfahren nach Anspruch 6, wobei der Wert der Molekulargewichtsverteilung (MWD) des in dem ersten Reaktor gebildeten Polymers 3 bis 6 beträgt und der MWD-Wert des Polyethylenharzes 4 bis 7 beträgt, wobei der MWD-Wert aus Mw/Mn unter Verwendung von GPC unter Messung von Mw und Mn bestimmt wird.

8. Verfahren nach Anspruch 6 oder 7, wobei die Dichte des in dem ersten Reaktor gebildeten Polymers 0,950 bis 0,960 g/cm$^3$ beträgt und die Dichte des Polyethylenharzes 0,930 bis 0,960 g/cm$^3$ beträgt, wobei die Dichten gemäß ASTM D1895-96 gemessen werden.

9. Separator für eine Sekundärbatterie, auf den das Polyethylenharz nach einem der Ansprüche 1 bis 5 oder das Polyethylenharz, das durch das Herstellungsverfahren nach einem der Ansprüche 6 bis 8 hergestellt wurde, aufgebracht wird.

**Revendications**

1. Résine de polyéthylène pour un séparateur de batterie secondaire, dans laquelle la résine de polyéthylène est une particule unique, et la résine de polyéthylène est composée d'un premier polymère de réacteur qui est un homopolymère et d'un second polymère de réacteur respectif qui est un copolymère, lesquels polymères respectifs sont produits dans un premier réacteur et un second réacteur respectifs qui sont connectés l'un à l'autre en série pour effectuer une polymérisation continue qui aboutit à la formation de particules uniques de la résine de polyéthylène, dans laquelle l'homopolymère est un homopolymère de polyéthylène et le copolymère est un copolymère de polyéthylène avec du propylène ou du butène,

   dans laquelle le premier et le second réacteur sont des réacteurs à suspension d'hexane ou à suspension d'heptane, et dans laquelle une homopolymérisation de faible poids moléculaire est effectuée dans le premier réacteur,
   en outre, dans laquelle le premier polymère de réacteur est un polymère de faible poids moléculaire ayant un poids moléculaire moyen de viscosité de 100 000 g/mol à 400 000 g/mol, qui est calculé à partir de la viscosité intrinsèque (IV) selon la norme ASTM D 4020, et dans laquelle la viscosité intrinsèque est mesurée selon la norme ISO 1628-1 après dissolution pendant 70 minutes (1,2 heure) dans une solution de décaline à 135°C, et le second polymère de réacteur est un polymère de haut poids moléculaire ayant un poids moléculaire moyen de viscosité de 1,5 million g/mol à 2,5 millions g/mol, qui est calculé à partir de la viscosité intrinsèque (IV) selon la norme ASTM D 4020, et dans lequel la viscosité intrinsèque est mesurée selon la norme ISO 1628-1 après dissolution pendant 70 minutes (1,2 heure) dans une solution de décaline à 135°C,
   et la résine de polyéthylène a un point de fusion présentant un double pic dans lequel un premier pic est compris entre 125°C et 132°C et un second pic est compris entre 133°C et 136°C,
   dans laquelle la température de fusion a été mesurée à l'aide d'un instrument DSC, et en augmentant initialement la température à 200°C, en maintenant un état isotherme pendant 10 minutes et en abaissant la température à 30°C à une vitesse de 10°C par minute, et en mesurant ensuite la température de fusion tout en augmentant la température à 200°C à une vitesse de 10°C par minute,
   **caractérisée en ce que** le poids moléculaire moyen de viscosité de la résine de polyéthylène est de 500 000 g/mol à 1,2 million g/mol, qui est calculé à partir de la viscosité intrinsèque (IV) selon la norme ASTM D 4020, et dans laquelle la viscosité intrinsèque est mesurée selon la norme ISO 1628-1 après dissolution pendant 70 minutes (1,2 heure) dans une solution de décaline à 135°C.

2. Résine de polyéthylène selon la revendication 1, dans laquelle la résine de polyéthylène a de préférence une valeur de distribution de poids moléculaire (MWD) de 4 à 7, qui est déterminée à partir de Mw/Mn en mesurant Mw et Mn en utilisant GPC.

3. Résine de polyéthylène selon la revendication 1 ou 2, dans laquelle la résine de polyéthylène est sous forme de poudre et a un diamètre moyen de particules D(v,0,5) de 110 à 140 μm, qui est mesuré selon la norme ISO13320-2 à l'aide d'un analyseur de particules de polymère.

4. Résine de polyéthylène selon la revendication 3, dans laquelle la résine de polyéthylène a de préférence une distribution granulométrique (SPAN) de 1,0 ou moins, exprimée en {D(v,0,9) - D(v ,0,1)} / D(v,0,5).

5. Résine de polyéthylène selon l'une quelconque des revendications 1 à 4, dans laquelle la résine de polyéthylène a une densité de 0,930 à 0,960g/cm$^3$ qui est mesurée conformément à la norme ASTM D1895-96.

6. Procédé de fabrication d'une résine de polyéthylène pour un séparateur de batterie secondaire dans un réacteur à suspension d'hexane ou à suspension d'heptane dans lequel deux ou plusieurs réacteurs sont connectés en série, comprenant un premier réacteur et un second réacteur, le procédé comprenant l'étape de polymérisation en continu du polymère formé dans le premier réacteur qui est un homopolymère de polyéthylène et du polymère polymérisé dans le second réacteur qui est un copolymère de polyéthylène avec du propylène ou du butène de manière à former des particules uniques, comprenant en outre l'étape d'injection de butène ou de propylène dans le second réacteur,

   dans lequel le premier et le second réacteur sont des réacteurs à suspension d'hexane ou à suspension d'heptane, et dans lequel une homopolymérisation de faible poids moléculaire est effectuée dans le premier réacteur,
   comprenant en outre l'étape d'injection d'hydrogène en contrôlant sa quantité d'injection, de sorte que le poids moléculaire moyen de viscosité du polymère formé dans le premier réacteur soit de 100 000 g/mol à 400 000 g/mol, qui est calculé à partir de la viscosité intrinsèque (IV) selon la norme ASTM D 4020, et dans lequel la viscosité intrinsèque est mesurée selon la norme ISO 1628-1 après dissolution pendant 70 minutes (1,2 heure) dans une solution de décaline à 135°C, et le poids moléculaire moyen de viscosité du polymère formé dans le second réacteur est de 1,5 million g/mol à 2,5 millions g/mol, qui est calculé à partir de la viscosité intrinsèque (IV) selon la norme ASTM D 4020, et dans lequel la viscosité intrinsèque est mesurée selon la norme ISO 1628-1 après dissolution pendant 70 minutes (1,2 heure) dans une solution de décaline à 135°C,

dans lequel le point de fusion de la résine de polyéthylène forme un double pic dans lequel un premier pic est compris entre 125°C et 132°C et un second pic est compris entre 133°C et 136°C,

dans lequel la température de fusion a été mesurée à l'aide d'un instrument DSC, et en augmentant initialement la température à 200°C, en maintenant un état isotherme pendant 10 minutes et en abaissant la température à 30°C à une vitesse de 10°C par minute, et en mesurant ensuite la température de fusion tout en augmentant la température à 200°C à une vitesse de 10°C par minute,

**caractérisé en ce que** le poids moléculaire moyen de viscosité de la résine de polyéthylène est de 500 000 g/mol à 1,2 million g/mol, qui est calculé à partir de la viscosité intrinsèque (IV) selon la norme ASTM D 4020, et dans lequel la viscosité intrinsèque est mesurée selon la norme ISO 1628-1 après dissolution pendant 70 minutes (1,2 heure) dans une solution de décaline à 135°C.

7. Procédé selon la revendication 6, dans lequel la valeur de distribution de poids moléculaire (MWD) du polymère formé dans le premier réacteur est de 3 à 6, et la valeur MWD de la résine de polyéthylène est de 4 à 7, dans lequel la valeur MWD est déterminée à partir de Mw/Mn en mesurant Mw et Mn en utilisant GPC.

8. Procédé selon la revendication 6 ou 7, dans lequel la densité du polymère formé dans le premier réacteur est de 0,950 à 0,960 g/cm$^3$, et la densité de la résine de polyéthylène est de 0,930 à 0,960 g/cm$^3$, qui sont mesurées conformément à la norme ASTM D1895-96.

9. Séparateur pour une batterie secondaire, sur lequel est appliquée la résine de polyéthylène selon l'une quelconque des revendications 1 à 5 ou la résine de polyéthylène fabriquée par le procédé de fabrication selon l'une quelconque des revendications 6 à 8 est appliquée.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200153752
- US 4972035 A
- CN 107936163